# EUROPEAN PATENT APPLICATION

(11) **EP 4 738 134 A1**
(43) Date of publication of application: **06.05.2026**
(21) Application number: 25210328.8
(22) Date of filing: 22.10.2025
(51) Int. Cl.: G06F 13/16, G06F 13/22

(54) **SYSTEM AND METHOD FOR LOW-POWER DOUBLE DATA RATE (LPDDR) COMPATIBLE HIGH BANDWIDTH NAND (HBN)**

(30) Priority: 30.10.2024 US 202463714078 P; 30.01.2025 US 202519041908
(71) Applicant: Samsung Electronics Co., Ltd., Suwon-si, Gyeonggi-do 16677 (KR)
(72) Inventor: LI, Zongwang, San Jose, CA, 95134 (US); LEE, Ho Bin, San Jose, CA, 95134 (US); YANG, Jing, San Jose, CA, 95134 (US); PITCHUMANI, Rekha, San Jose, CA, 95134 (US); KI, Yang Seok, San Jose, CA, 95134 (US); JUNG, Myung June, San Jose, CA, 95134 (US)
(74) Representative: Kuhnen & Wacker Patent- und Rechtsanwaltsbüro PartG mbB

(57) **Abstract**

Systems and methods for low-power double data rate, LPDDR, compatible High Bandwidth NAND, HBN, include receiving, from an application, a request associated with a memory device, the request being of a request type; issuing a first command to the memory device via a memory controller, the first command based on the request type; polling the memory device for a status of the memory device, the status associated with a readiness of the memory device for the request; determining that the memory device is ready based on the status; and issuing a second command to the memory device via the memory controller to fulfill the request.

## Description

### FIELD

One or more aspects of embodiments according to the present disclosure relate to computing systems, and more particularly to a system and method for low-power double data rate compatible High Bandwidth Flash.

### BACKGROUND

Some computing devices such as mobile device may utilize low-power double data rate (LPDDR) SDRAM and are equipped with an LPDDR memory controller. High Bandwidth Flash (HBF) NAND memory devices may have potential to provide higher throughput, but may be incompatible with LPDDR memory controllers.

It is with respect to this general technical environment that aspects of the present disclosure are related.

### OBJECTIVE OF THE DISCLOSURE

The object of the present disclosure is to provide a system and method for LPDDR compatible high bandwidth NAND.

### SUMMARY

In one or more embodiments, a method comprises: receiving, from an application, a request associated with a memory device, the request being of a request type; issuing a first command to the memory device via a memory controller, the first command based on the request type; polling the memory device for a status of the memory device, the status associated with a readiness of the memory device for the request; determining that the memory device is ready based on the status; and issuing a second command to the memory device via the memory controller to fulfill the request.

In some embodiments, the memory controller includes a low-power double data rate (LPDDR) memory controller.

In some embodiments, the memory device includes a High Bandwidth Flash NAND memory and a front-end controller configured to control the High Bandwidth Flash NAND memory based on commands from the LPDDR memory controller.

In some embodiments, the request type is a write request.

In some embodiments, the status of the memory device is based on availability of space in a buffer of the memory device.

In some embodiments, the method further comprises reserving an amount of space in the buffer for the application.

In some embodiments, the request type is a read request.

In some embodiments, the status of the memory device is based on availability of data associated with the request in a buffer of the memory device.

In one or more embodiments, a system, comprises: a host comprising: a memory controller; a processing circuit; and memory connected to the processing circuit, the memory storing instructions that, when executed by the processing circuit, causes performance of a method, the method comprising: receiving, from an application, a request associated with a memory device, the request being of a request type; issuing a first command to the memory device via the memory controller, the first command based on the request type; polling the memory device for a status of the memory device, the status associated with a readiness of the memory device for the request; determining that the memory device is ready based on the status; and issuing a second command to the memory device via the memory controller to fulfill the request.

In some embodiments, the memory controller includes a low-power double data rate (LPDDR) memory controller.

In some embodiments, the memory device includes a High Bandwidth Flash NAND memory and a front-end controller configured to control the High Bandwidth Flash NAND memory based on commands from the LPDDR memory controller.

In some embodiments, the request type is associated with a write request.

In some embodiments, the status of the memory device is based on availability of space in a buffer of the memory device.

In some embodiments, the method further comprising reserving an amount of space in the buffer for the application.

In some embodiments, the request type is a read request.

In some embodiments, the status of the memory device is based on availability of data associated with the request in a buffer of the memory device.

In one or more embodiments, a memory device, comprises: a High Bandwidth NAND (HBN); and a front-end controller configured to control access to the HBN, the front-end controller comprising: a buffer; a processing circuit; and memory connected to the processing circuit, the memory storing instructions that, when executed by the processing circuit, causes performance of a method, the method comprising: receiving a first command from a memory controller of a host device; determining that a status of the buffer satisfies a condition associated with the first command; transmitting the status of the buffer to the memory controller; receiving a second command from the memory controller; and executing an action with respect to the buffer based on the second command.

In some embodiments, the second command is a read request for data stored in the HBN, and wherein the condition includes the data being in the buffer.

In some embodiments, the second command is a write request for data to be stored in the HBN, and wherein the condition includes the buffer having enough space available for the data.

In some embodiments, the method further comprises: reserving an amount of space in the buffer for the data.

### ADVANTAGEOUS EFFECT OF THE INVENTION

Embodiments of the present disclosure provide systems including the front-end controller that facilitates interactions between the LPDDR memory controller and the HBN.

Specifically, systems and methods that have improved compatibility between the LPDDR memory controller and the HBN by preloading data from the HBN to the buffer for read operations and allocating space on the buffer for write operations by the front-end controller are provided.

### BRIEF DESCRIPTION OF THE DRAWINGS

These and other features and advantages of the present disclosure will be appreciated and understood with reference to the specification, claims, and appended drawings wherein:
Fig. 1 depicts a block diagram of a system, in accordance with one or more embodiments of the present disclosure;
Fig. 2 depicts a block diagram of a system with LPDDR-compatible HBFHBN, in accordance with one or more embodiments of the present disclosure;
Fig. 3 depicts a timing graph of a read operation carried out by a system with LPDDR-compatible HBF, in accordance with one or more embodiments of the present disclosure;
Fig. 4 depicts a timing graph of a write operation carried out by a system with LPDDR-compatible HBF, in accordance with one or more embodiments of the present disclosure;
FIG. 5 depicts a flow diagram of a process for interacting with a memory device via a host memory controller, in accordance with one or more embodiments of the present disclosure;
Fig. 6 depicts a flow diagram of a process for executing a read request on a memory device via a host memory controller, in accordance with one or more embodiments of the present disclosure;
Fig. 7 depicts a flow diagram of a process for executing a write request on a memory device via a host memory controller, in accordance with one or more embodiments of the present disclosure; and
Figs. 8A-8B depict a flow diagram of a process for executing, by a memory device, a request received from a host memory controller, in accordance with one or more embodiments of the present disclosure.

### DETAILED DESCRIPTION

The detailed description set forth below in connection with the appended drawings is intended as a description of exemplary embodiments of a system and method for LPDDR compatible high bandwidth NAND provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like reference numbers are intended to indicate like elements or features.

High Bandwidth NAND (HBN) is a type of NAND flash memory with a wide input/output (I/O) interface, which provides more data channels (e.g., I/O lines) for faster communication with the memory controller and higher throughput. Due to its high bandwidth and throughput, High Bandwidth NAND (HBN) memory may be able to improve the performance of mobile devices for high throughput applications like large language model (LLM) applications and other artificial intelligence (AI) or machine learning (ML) applications, among others. However, some mobile platforms utilize a low-power double data rate (LPDDR) SDRAM interface for high throughput applications, which is generally incompatible with HBN. For example, a LPDDR memory controller operates based on a latency time for read and write operations that may be shorter than the latency time for HBN read and write operations. Thus, there is a timing issue that may cause system issues if the LPDDR memory controller were to read data from, or write data to, an HBN directly.

The present disclosure provides techniques for a memory device that utilizes HBFNAND memory to be compatible with existing LPDDR memory controllers. The memory device includes a front-end controller that facilitates interactions between the LPDDR memory controller and the HBN. In some embodiments, for read operations, the front-end controller preloads data from the HBN to a buffer so that the LPDDR memory controller can load data from the buffer instead of the HBN. This may reduce the read latency time experienced by the LPDDR memory controller to an acceptable amount of time. Similarly, for write operations, the front-end controller allocates space on a buffer so that the LPDDR memory controller can write data to the buffer instead of the HBN. Thus, the write latency time experienced by the LPDDR is the time it takes to write the data to the buffer, which may be shorter than the latency time of writing data to the HBN. The present techniques allow HBN to be used in mobile devices with LPDDR memory controllers without changes to the application processor memory controller of the device.

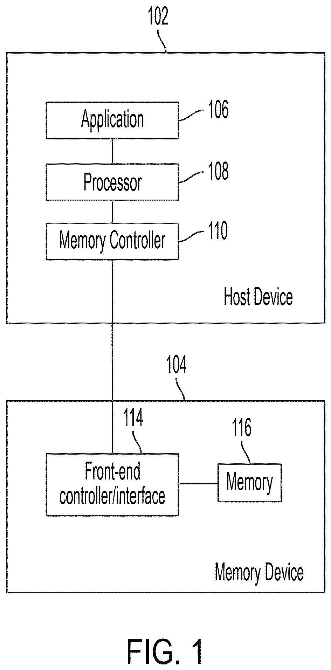

Fig. 1 depicts a block diagram of a system 100, in accordance with one or more embodiments. The system 100 may include a host computing device (or host) 102 and a memory device 104. In some embodiments, the host 102 and the memory device 104 may communicate via data communication links or general-purpose interfaces such as, for example, an LPDDR interface, Ethernet, Universal Serial Bus (USB), and/or any wired or wireless data communication link.

The host 102 may include a processor 108, an application 106, and a memory controller 110. The processor 108 may include one or more central processing unit (CPU) cores configured to run one or more applications 106 based on computer program instructions stored in a system memory, elsewhere in the host 102, in the memory device 104, elsewhere in the system 100, or obtained via one or more communication links.

The processor 108 may be or include a processing circuit and may include, for example, a digital circuit (e.g., a microcontroller, a microprocessor, a digital signal processor, or a logic device (e.g., a field programmable gate array (FPGA), an application-specific integrated circuit (ASIC), and/or the like)) capable of executing data access instructions (e.g., via firmware and/or software) to provide access to and from the data stored in memory according to the data access instructions.

The application 106 may be any application configured to transmit requests (e.g., write, read requests) for the memory controller 110 to access the memory device 104. For example, the application 106 may be a big data analysis application, large language model application, e-commerce application, database application, artificial intelligence application, machine learning application, and/or the like.

The memory controller 110 may be configured to facilitate interactions between the processor 108 and a memory such as memory device 104. For example, the memory controller 110 may execute read or write (or load and store) commands with respect to the memory device 104. In some embodiments, the memory controller 110 is an LPDDR memory controller configured to interface with an LPDDR SDRAM. In some embodiments, the memory controller 110 may access multiple memory devices, including the memory device 104. The multiple memory devices may have respective Ranks. For example, the memory device 104 may be a Rank 1 memory device and enabled by a chip select for Rank 1.

The memory device 104 may include a memory 116 and a front-end controller 114. The front-end controller 114 may be connected to the memory 116 over one or more storage interfaces such as Serial Advanced Technology Attachment (SATA), Non-Volatile Memory Express (NVMe), Peripheral Component Interconnect Express (PCle), Serial Attached SCSI (SAS), M.2 Form Factor, Direct Memory Access (DMA), among others. The front-end controller 114 may receive requests from the memory controller 110 and facilitate interactions between the memory controller 110 and memory 116. In some embodiments, such as in embodiments in which the memory controller 110 is an LPDDR memory controller, the memory 116 may exhibit a higher latency time than is compatible with the LPDDR memory controller. In such cases, the front-end interface may be configured to control aspects of the memory device 104 such that the LPDDR memory controller experiences the expected latency time for read and write operations.

In some embodiments, the host 102 may include one or more kernels. In some embodiments, a device driver may be installed in a kernel. The device driver enables the memory controller 110 to interact (e.g. execute read/write requests) with the front-end controller 114 of the memory device 104. In some embodiments, the application 106 includes or utilizes a library and/or an application programming interface (API) that facilitates requests to be made to the device driver and to the memory device 104.

In one or more embodiments, some connections between various components illustrated in Fig. 1 enable the components to send and receive data using a protocol such as, for example, a Compute Express Link (CXL), although embodiments are not limited thereto. In addition or in lieu of CXL, various interfaces may use other protocols such as Cache Coherent Interconnect for Accelerators (CCIX), dual in-line memory module (DIMM) interface, Small Computer System Interface (SCSI), Non Volatile Memory Express (NVMe), Peripheral Component Interconnect Express (PCle), remote direct memory access (RDMA) over Ethernet, Serial Advanced Technology Attachment (SATA), Fiber Channel, Serial Attached SCSI (SAS), NVMe over Fabric (NVMe-oF), iWARP protocol, InfiniBand protocol, 5G wireless protocol, Wi-Fi protocol, Bluetooth protocol, and/or the like.

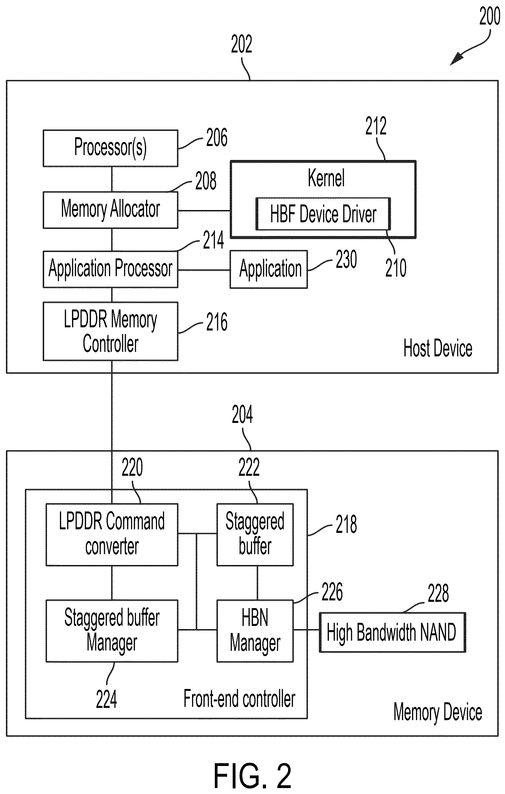

Fig. 2 depicts a block diagram of a system 200 with LPDDR-compatible HBN, in accordance with one or more embodiments of the present disclosure. The system 200 may be an embodiment of system 100. The system 200 may include a host 202 and a memory device 204. The host 202 may include one or more processors 206 such as a central processing unit (CPU), a graphics processing unit (GPU), and/or a neural processing unit (NPU). The host 202 may further include a memory allocator 208, a device driver 210, a kernel 212, an application processor 214, and an LPDDR memory controller 216. The memory device 204 may include a High Bandwidth NAND (HBN) 228 and a front-end controller 218 configured to facilitate interactions between the LPDDR memory controller and the HBN 228.

In some embodiments, the application 230 may send a read or write request to the application processor 214, which triggers the kernel 212 to issue various commands in order to fulfill the request from the application 230. In some embodiments, the device driver 210 enables the kernel 212 to send commands to the LPDDR memory controller 216 and to the memory device 204 via the LPDDR memory controller 216 to fulfill the request from the application 230. In some embodiments, the device driver 210 includes a mapping of addresses in the HBN 228 to virtual addresses utilized by the kernel 212 and/or the application 230. In some embodiments, the device driver 210 includes a mapping of reserved addresses in the HBN 228 and corresponding handshake commands.

The LPDDR memory controller 216 may receive commands from the kernel 212 to issue various commands to the memory device 204 using LPDDR commands. In some embodiments, the LPDDR memory controller 216 may issue access commands (e.g., read and write) or handshake commands (e.g., fetch, allocate, poll data, poll buffer).

In some embodiments, a fetch command is a handshake operation conducted between the memory device 204 and the host 202 ahead of a read command issued by the host 202 in order for the memory device 204 to preload the requested data from the HBN 228 into a buffer 222 so that the LPDDR memory controller 216 can load the data from the buffer 222 instead of directly from the HBN 228. Loading data directly from the HBN 228 incurs a longer latency time than is compatible with the LPDDR memory controller 216. Loading data from the buffer 222 incurs a shorter latency time that is compatible with the LPDDR memory controller 216. In some embodiments, the buffer 222 is a stagger buffer, which allows data to be organized or accessed in a non-sequential way. For example, different parts of the stagger buffer may be accessed at different times, or data might be written to and read from the buffer at staggered intervals.

In some embodiments, an allocate command is a handshake operation conducted between the memory device 204 and the host 202 ahead of a write command issued by the host 202 in order for the memory device 204 to allocate space on the buffer 222 so that the LPDDR memory controller 216 can write the data to the buffer 222 instead of directly to the HBN 228. Writing data directly to the HBN 228 incurs a longer latency time than is compatible with the LPDDR memory controller 216. Writing data to the buffer 222 instead incurs a shorter latency time that is compatible with the LPDDR memory controller 216.

In some embodiments, a poll data command is a handshake operation conducted between the memory device 204 and the host 202 ahead of a read command issued by the host 202 in order for the host 202 to know whether the request data is in the buffer 222 and thus ready for the read by the LPDDR memory controller 216.

In some embodiments, a poll buffer command is a handshake operation conducted between the memory device 204 and the host 202 ahead of a write command issued by the host 202 in order for the host 202 to know whether there is space available on the buffer 222 and thus whether the LPDDR memory controller 216 will be able to write data directly to the buffer 222.

The LPDDR command converter 220 receives the commands from the LPDDR memory controller 216 and triggers processes in the front-end controller 218 based on the received commands. In some embodiments, the received command may include data parameters including an address of the HBN 228. In some embodiments, the address is a reserved address indicating the type of handshake command to be carried out.

The buffer 222 provides an intermediate storage device that can be accessed directly by the LPDDR memory controller 216 for a read command or a write command such that the LPDDR memory controller 216 experiences less latency time and thus can function as expected. The buffer manager 224 may access the buffer 222 or manage metadata of the buffer 222 to check whether requested data is ready in the buffer 222 in response to the poll data command or to check whether the there is enough space available in the buffer 222 in response to a poll buffer command, among other possible states or conditions of the buffer 222. The HBN manager 226 may write data to the HBN 228 from the buffer 222 or load data from the HBN 228 to the buffer 222.

In some embodiments, the LPDDR memory controller 216 may access multiple memory devices, including the memory device 204. The multiple memory devices may have respective ranks and the LPDDR memory controller 216 may select among them via a chip select. For example, the memory device 204 may be a rank 1 memory device.

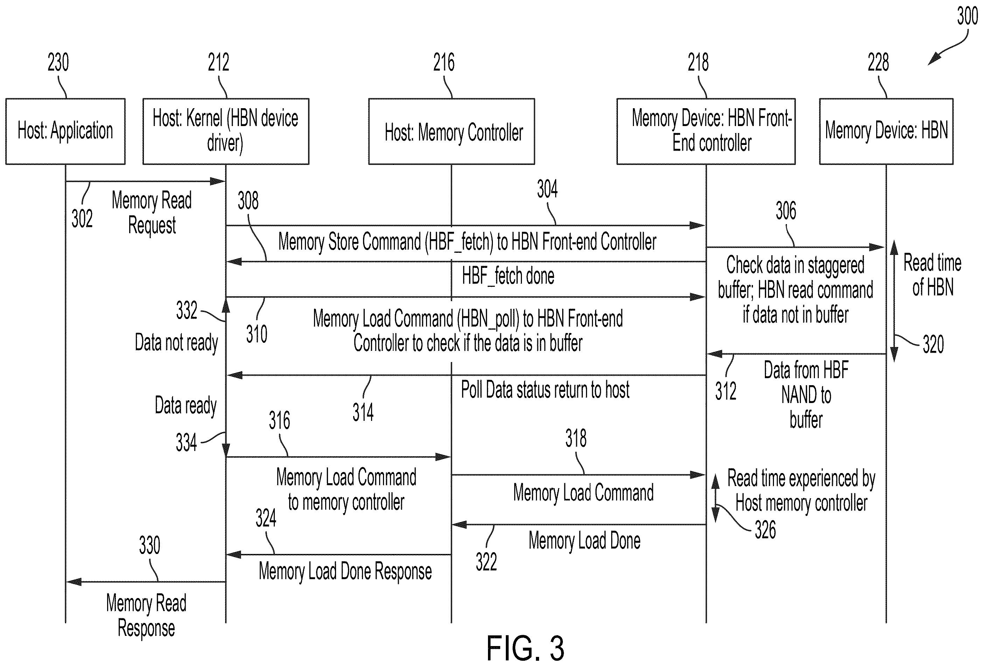

Fig. 3 depicts a timing graph 300 of a read operation carried out by a system 200 with LPDDR-compatible HBN, in accordance with one or more embodiments of the present disclosure. The system 200 includes components of a host 202, including an application 230, a kernel 212 on which a device driver 210 is installed, and a LPDDR memory controller 216. The system 200 includes components of a memory device 204, including a front-end controller 218 and an HBN 228. The application 230 sends a read request 302 to the kernel 212, which triggers the kernel 212 to issue a fetch command 304 to the front-end controller 218 of the memory device 204. In some embodiments, the fetch command is issued to the front-end controller 218 via the LPDDR memory controller 216. In some embodiments, the fetch command is issued to the front-end controller 218 as a command associated with a reserved address of the HBN 228 which is specific to the fetch command. In some embodiments, the fetch command also includes data indicating an address of the data to be fetched. In some embodiments, a fetch command is a handshake operation conducted between the memory device 204 and the host 202 ahead of a read command issued by the host 202 in order for the memory device 204 to preload the requested data from the HBN 228 into a buffer so that the LPDDR memory controller 216 can load the data from the buffer instead of directly from the HBN 228. Loading data directly from the HBN 228 incurs a longer latency time than is compatible with the LPDDR memory controller 216. Loading data from the buffer incurs a shorter latency time that is compatible with the LPDDR memory controller 216.

Upon receiving the fetch command, the front-end controller 218 checks whether the associated data is in a buffer of the front-end controller 218. If the data is not already in the buffer, the front-end controller 218 issues a read command 306 to the HBN 228 to load the data to the buffer. Upon issuing the read command 306, the front-end controller 218 returns a confirmation 308 to the kernel 212. In some embodiments, the front-end controller 218 also returns an estimated data ready time with the confirmation 308 if the data is not yet in the buffer. The estimated data ready time may indicate an estimated time for when the requested data will be in the buffer and ready for the read directly by the LPDDR memory controller 216. The data 312 is loaded from the HBN 228 to the buffer after a read time 320, or read latency of the HBN 228.

The kernel 212 may issue a poll data command 310 to the front-end controller 218 to check whether the data is in the buffer and thus ready to the read by the LPDDR memory controller 216. The front-end controller 218 returns a data status 314 to the kernel 212 indicating whether the data is ready or not ready. If the data is not ready 332, the kernel 212 may issue another poll data command 310 at a later time to check again, until the data is ready. If the data is ready 334, the kernel 212 issues a load command 316 to the LPDDR memory controller 216, and the LPDDR memory controller 216 issues a load command 318 to the front-end controller 218. The data is loaded from the buffer and returned to the LPDDR memory controller 216 in response 322, with read time 326 experienced by the LPDDR memory controller 216. The data is then returned from the LPDDR memory controller 216 to the kernel 212 in response 324, and further to the application in response 330.

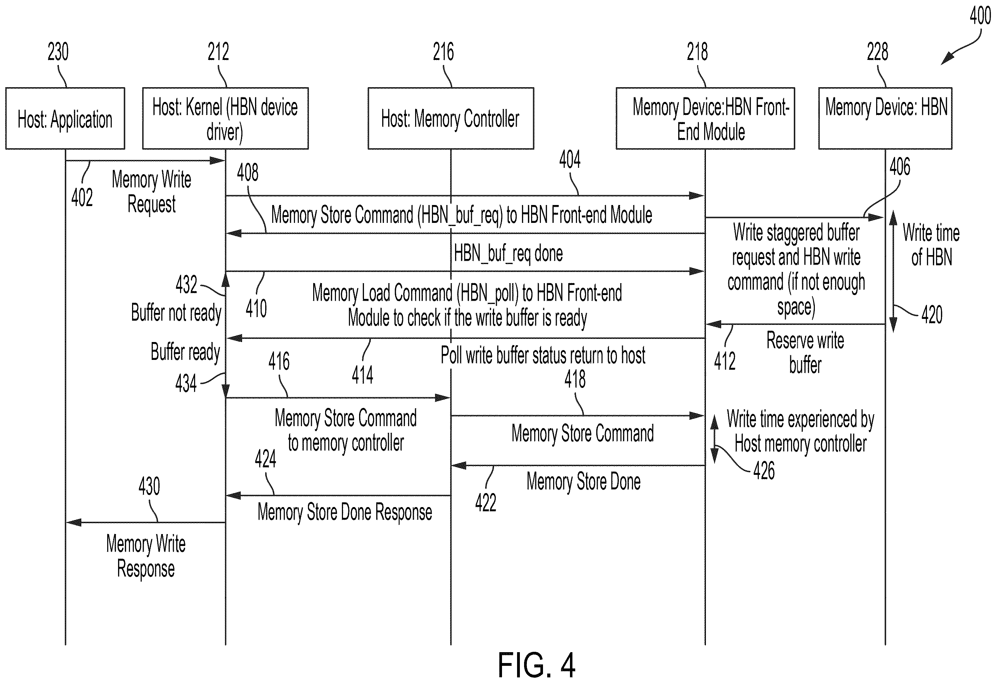

Fig. 4 depicts a timing graph 400 of a write operation carried out by a system 200 with LPDDR-compatible HBN, in accordance with one or more embodiments of the present disclosure. The operable system components are similar to those discussed in FIG. 3. The application 230 sends a write request 402 to the kernel 212, which triggers the kernel 212 to issue an allocate command 404 to the front-end controller 218 of the memory device 204. In some embodiments, the allocate command 404 is issued to the front-end controller 218 via the LPDDR memory controller 216. In some embodiments, the allocate command 404 is issued to the front-end controller 218 as a command associated with a reserved address of the HBN 228 which is specific to the allocate command. In some embodiments, the allocate command 404 is a handshake operation conducted between the memory device 204 and the host 202 ahead of a write command issued by the host 202 in order for the memory device 204 to allocate space on a buffer so that the LPDDR memory controller 216 can write data to the buffer instead of directly to the HBN 228. Writing data directly to the HBN 228 incurs a longer latency time than is compatible with the LPDDR memory controller 216. Writing data to the buffer incurs a shorter latency time that is compatible with the LPDDR memory controller 216.

Upon receiving the allocate command 404, the front-end controller 218 checks whether the buffer of the front-end controller 218 has enough space available for the data. If there is not enough space available in the buffer, the front-end controller 218 initiates an allocation write command 406 to write some existing data in the buffer to the HBN 228 in order to allocate space on the buffer for the incoming data. The front-end controller 218 returns a confirmation 408 to the kernel 212. In some embodiments, the front-end controller 218 also returns an estimated buffer ready time with the confirmation 408 if the buffer is not yet ready. The estimated buffer ready time may indicate an estimated time for when the buffer will have space available for the data so that the LPDDR memory controller 216 can write the data to the buffer. In some embodiments, when the existing data has been moved from the buffer to the HBN 228, a buffer reserve command 412 is made to the HBN front-end module to reserve the allocated space on the buffer for the incoming data.

The kernel 212 may issue a poll buffer command 410 to the front-end controller 218 to check whether the buffer is ready (e.g., has space available for the data). The front-end controller 218 returns a buffer status 414 to the kernel 212 indicating whether the buffer is ready or not. If the buffer is not ready 432, the kernel may issue another poll buffer command 410 at a later time to check again, until the buffer is ready. If the buffer is ready 434, the kernel issues a write command 416 to the LPDDR memory controller 216, and the LPDDR memory controller 216 issues a write command 418 to the front-end controller 218 with the data. The data is stored in the buffer by the front-end controller 218. Thus, the write time 426 experienced by the LPDDR memory controller 216 is shorter than the write time 420 of the HBN 228, and compatible with the LPDDR memory controller 216.

The front-end module returns a confirmation response 422 to the LPDDR memory controller 216. The LPDDR memory controller 216 returns a confirmation response 424 of the write to the kernel 212, which returns a confirmation response 430 to the application. 230.

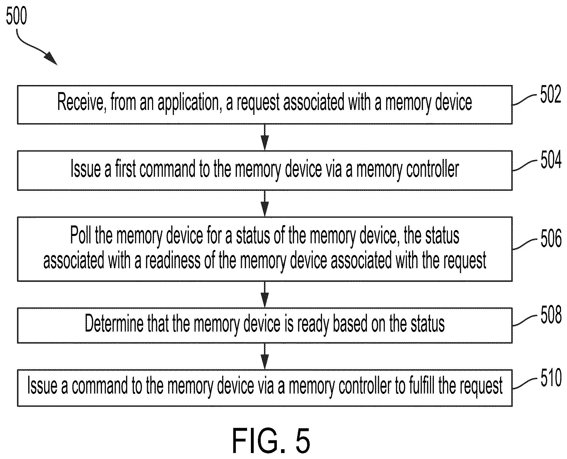

Fig. 5 depicts a flow diagram of a process 500 for interacting with a memory device 104 via a memory controller 110 of a host 102, according to one or more embodiment of the present disclosure. At operation 502, the host 102 receives a request from an application 106. In some embodiments, the request is associated with a memory device 104. For example, the request may include a read request to read data, from a memory 116 (e.g., HBN 228) of the memory device 104, to be consumed by the application 106. In some embodiments, the request may include a write request to write data from the application to the memory 116 of the memory device 104.

At operation 504, the host 102 issues a first command to the memory device 104 via the memory controller 110. In some embodiments, the first command is based on the request type of the request from the application 106 (where the request type may be either a read request or a write request). For example, if the request from the application is a read request, the first command issued to the memory device 104 may be a fetch command to fetch the data requested by the application from the memory 116 of the memory device 104. In some embodiments, the fetch command may trigger the memory device 104 to load the requested data from the memory 116 into a buffer of the front-end controller 114. If the request from the application is a write request, the first command issued to the memory device 104 may be an allocate command to allocate space on a buffer of the front-end controller 114 for the data to be written to the memory 116. In some embodiments, the allocate command may trigger the memory device 104 to initiate an operation to allocate and/or reserve space on the buffer for the data from the application 106.

At operation 506, the host 102 polls the memory device 104 for a status of the memory device 104. In some embodiments, the status is associated with a readiness of the memory device 104 for the request and associated with the request type. For example, if the request from the application 106 is a read request, the status of the memory device 104 may be based on the availability of the requested data in a buffer of the memory device 104. As it may take some time (e.g., microseconds) for the memory device 104 to load the requested data from the memory 116 into the buffer after the memory device 104 receives the first command issued by the host 102 in operation 504, the host 102 may keep polling the memory device 104 until the status indicates that the requested data is in the buffer. If the request from the application 106 is a write request, the status of the memory device 104 may be based on the availability of space in a buffer of the memory device 104 for the data. In some embodiments, it may take some time (e.g., microseconds) for the memory device 104 to a allocate space in the buffer, for example by offloading existing data in the buffer, in response to receiving the first command issued by the host 102 in operation 504. Thus, the host 102 may keep polling the memory device 104 until the status indicates that space is available in the buffer for the data from the application 106.

At operation 508, the host 102 may determine that the memory device is ready based on the status polled at operation 506. At operation 510, the host 102 issues a second command to the memory device 104 via the memory controller 110 to fulfill the request. In some embodiments, the second command may include a native read or write command that can be issued by the memory controller 110. For example, in some embodiments, the memory controller 110 is a LPDDR memory controller 216 and the second command (e.g., native read or write command) is issued by LPDDR memory controller 216. In some embodiments, the second command (e.g., native read or write command) issued by LPDDR memory controller 216 is an LPDDR command and is agnostic to the type of memory 116 of the memory device 104.

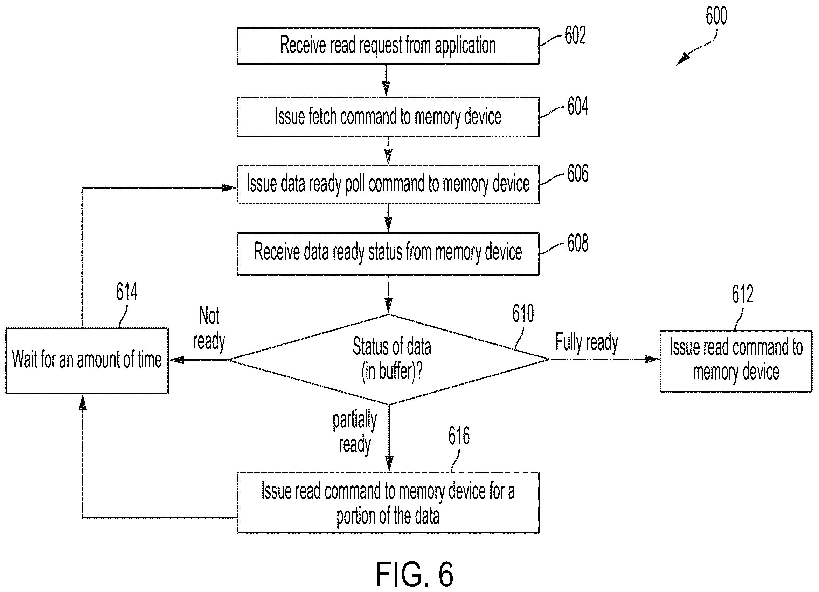

Fig. 6 depicts a flow diagram of a process 600 for executing a read request on a memory device 104 via a memory controller 110 of a host 102, according to one or more embodiment of the present disclosure. At operation 602, the host 102 receives a read request from an application 106 to read data from a memory 116 (e.g., HBN 228) of the memory device 104 to be consumed by the application 106.

At operation 604, the host 102 issues a fetch command to the memory device 104 to fetch the data requested by the application from the memory 116 of the memory device 104. In some embodiments, the fetch command may trigger the memory device 104 to load the requested data from the memory 116 into a buffer of the front-end controller 114.

At operation 606, the host 102 issues a poll command to the memory device 104 to determine a status of the memory device 104 with respect to fetching the requested data from the memory. In some embodiments, the status of the memory device 104 is based on the availability of the requested data in the buffer of the memory device 104.

At operation 608, the host 102 receives the status from the memory device 104 and determines, at operation 610, the state of the data (e.g., if the data is in the buffer). If the data is fully ready (e.g., all of the requested data is in the buffer), the process 600 proceeds to operation 612. At operation 612, the host 102 issues a read command to the memory device 104. In some embodiments, the memory controller 110 is a LPDDR memory controller 216 and the LPDDR memory controller 216 issues a LPDDR read command to the memory device 104.

If the data is not ready (e.g., none of the data is in the buffer), the process 600 proceeds to operation 614. At operation 614, the host 102 waits for a certain amount of time before it proceeds to operation 606 and issues another poll command to check the status of the data. In some embodiments, when the host 102 polled the memory device for the status, and the response from the memory device 104 indicated that the data is not ready, the response from the memory device 104 may also include an estimated amount of time it would take for the data to be ready, or an amount of time for the host to wait before polling again. In some embodiments, the amount of time the host 102 waits before polling again may be based on a predetermined polling frequency or schedule.

In some embodiments, the requested data may be partially ready (e.g., a portion of the data is in the buffer). If this is the case, the process 600 proceeds to operation 616. At operation 616, the host 102 issues a read command to the memory device 104 for the portion of the data that is ready (e.g., in the buffer). The process 600 may then proceed to operation 614, in which the host waits an amount of time before polling the memory device 104 again to check if the remaining data is ready. The host 102 may poll the memory device 104 until a read command has been issued for all of the requested data.

The illustrated embodiment includes three possible readiness states of the requested data (fully ready, not ready, partially ready). In some embodiments, the status may have only two states, either ready or not ready, and a read command is issued by the host 102 when the data is fully ready.

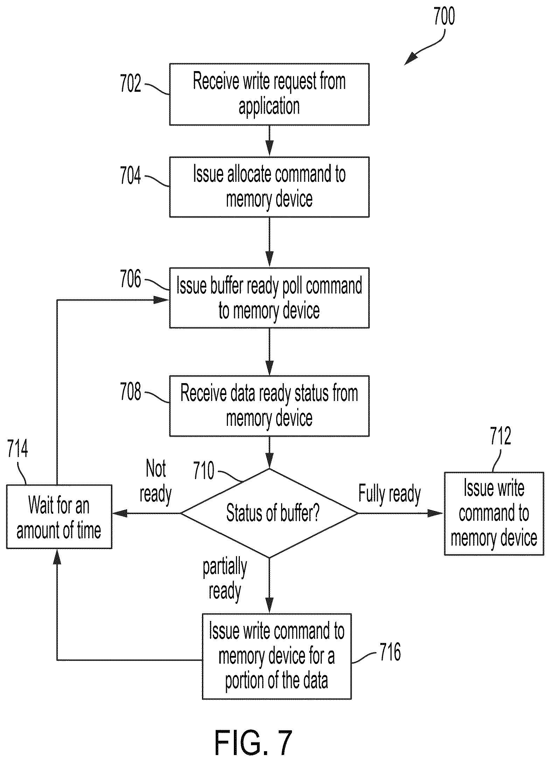

Fig. 7 depicts a flow diagram of a process 700 for executing a write request on a memory device via a host memory controller, according to one or more embodiments of the present disclosure. At operation 702, the host 102 receives a write request from an application 106 to write data to a memory 116 (e.g., HBN 228) of the memory device 104.

At operation 704, the host 102 issues an allocate command to the memory device 104 to allocate space on a buffer of the memory device 104 for the data. In some embodiments, the allocate command causes the memory device 104 to load the requested data from the memory 116 into a buffer of the front-end controller 114.

At operation 706, the host 102 issues a poll command to the memory device 104 to determine a status of the memory device 104 with respect to available space on the buffer. In some embodiments, the status of the memory device 104 is based on the whether the buffer of the memory device 104 has enough space available for the data.

At operation 708, the host 102 receives the status from the memory device 104 and determines, at operation 710, the status of the buffer (e.g., whether the buffer has enough space available for the data). If the buffer is fully ready (e.g., buffer has enough space for all of the data), the process 700 proceeds to operation 712. At operation 712, the host 102 issues a write command to the memory device 104 with the data. In some embodiments, the memory controller 110 is a LPDDR memory controller 216 and the LPDDR memory controller 216 issues a LPDDR write command to the memory device 104.

If the buffer is not ready (e.g., there is no space available in the buffer), the process 700 proceeds to operation 714. At operation 714, the host 102 waits for a certain amount of time before it proceeds to operation 706 and issues another poll command to check the status of the buffer. In some embodiments, when the host 102 polled the memory device for the status, and the response from the memory device 104 indicated that the buffer is not ready, the response from the memory device 104 may also include an estimated amount of time it would take for the buffer to be ready, or an amount of time for the host to wait before polling again. In some embodiments, the amount of time the host 102 waits before polling again may be based on a predetermined polling frequency or schedule.

In some embodiments, the buffer may be partially ready (e.g., the buffer may have space available for a portion of the data). If this is the case, the process 700 proceeds to operation 716. At operation 716, the host 102 issues a write command to the memory device 104 for the portion of the data for which there is space available on the buffer. The process 700 may then proceed to operation 714, in which the host 102 waits an amount of time before polling the memory device 104 again to check if the buffer is ready for the remaining data. The host 102 may poll the memory device 104 until a write command has been issued for all of the data.

The illustrated embodiment includes three possible readiness states of the buffer (fully ready, not ready, partially ready). In some embodiments, the status may have only two states, either ready or not ready, and a write command is issued by the host 102 when the buffer is fully ready.

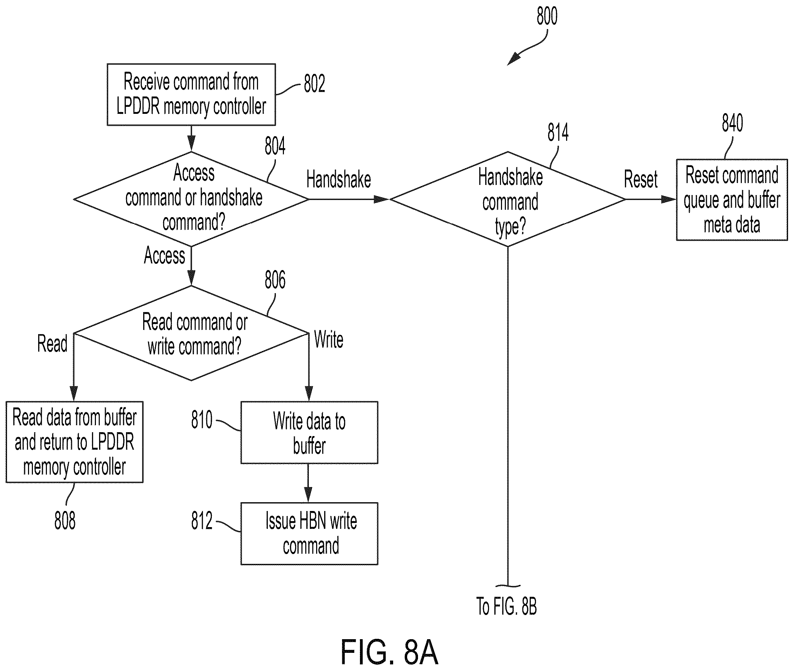

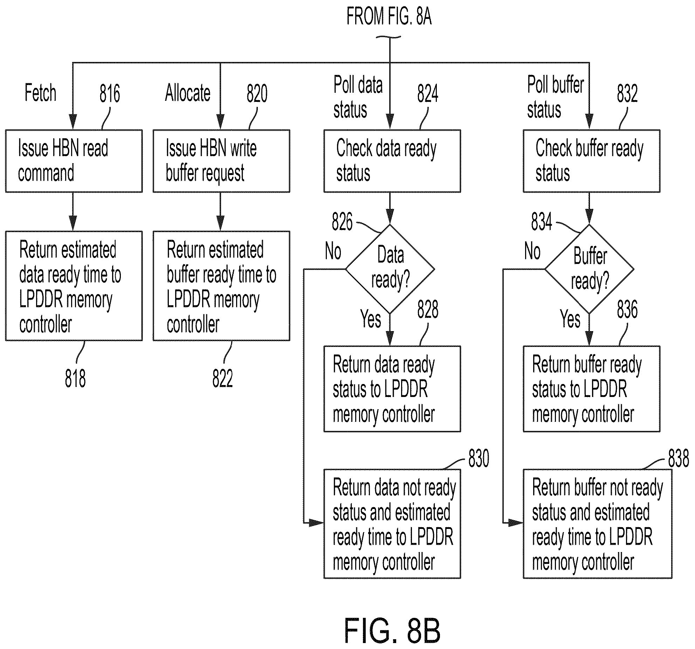

Figs. 8A-8B depict a flow diagram of a process 800 for executing, by a memory device 204, a request received from a host memory controller, according to one or more embodiments of the present disclosure. At operation 802, the memory device 204 receives a command from an LPDDR memory controller 216. The command may be either by an access type command or a handshake type command. Examples of access type commands may include read commands and write commands. Examples of handshake type commands may include a fetch command, an allocate command, a poll data command, a poll buffer command, and a reset command. At operation 804, the memory device 204 determines if the command is an access type command or a handshake type command. If the command is an access type command, the process 800 proceeds to operation 806.

At operation 806, the memory device 204 determines if the command is a read command or a write command. If the command is a read command, the process 800 proceeds to operation 808. At operation 808, the memory device 204 reads data from a buffer and returns the data to the LPDDR memory controller 216. If the command is a write command, which includes data to be written to the memory of the memory device 204, the process 800 proceeds to operation 810. At operation 810, the memory device 204 writes the data associated with the write command to the buffer. At operation 812, the memory device 204 issues a write command to write the data from the buffer to the HBN 228.

At operation 804, if the command is a handshake type command, the process 800 proceeds to operation 814, and the memory device 204 determines what type of handshake command the command is. If the command is a fetch command, the process 800 proceeds to operation 816. At operation 816, the memory device 204 issues a read command to the HBN 228 to load the requested data from the HBN 228 to the buffer. At operation 818, the memory device 204 returns a confirmation and an estimated data ready time to the host 202. The estimated data ready time indicates an estimated time for when the requested data will be in the buffer and ready to the read directly by the LPDDR memory controller 216.

If the command is an allocate command, the process 800 proceeds to operation 820. At operation 820, the memory device 204 initiates a buffer allocation operation to allocate space on the buffer for the data. In some embodiments, the allocation operation includes offloading old data from the buffer. At operation 822, the memory controller 110 returns an estimated buffer ready time to the host 202. The estimated buffer ready time indicates an estimated time for when there will be space available on the buffer for the LPDDR memory controller 216 to write the data to the buffer.

If the command is a poll data command, the process 800 proceeds to operation 824. In some embodiments, the poll data command is a handshake operation conducted between the memory device 204 and the host 202 ahead of a read command issued by the host 202 in order for the host 202 to know whether the requested data is in the buffer and thus ready to the read directly by the LPDDR memory controller. At operation 824, the memory device 204 checks whether the requested data is in the buffer. At operation 826, the memory device 204 determines whether the data is ready. If the data is ready, the process 800 proceeds to operation 828. At operation 828, the memory device 204 returns a data ready status to the host 202. If the data is not ready, at operation 830, the memory device 204 returns a data not ready status to the host 202. In some embodiments, the memory device 204 also returns an estimated data ready time to the host 202.

If the command is a poll buffer command, the process 800 proceeds to operation 832. At operation 832, the memory device 204 checks whether the buffer is ready. At operation 834, the memory device 204 determines whether the buffer is ready. If the buffer is ready, the process 800 proceeds to operation 836. At operation 836, the memory device 204 returns a buffer ready status to the host 202. If the buffer is not ready, at operation 838, the memory device 204 returns a buffer not ready status to the host 202. In some embodiments, the memory device 204 also returns an estimated buffer ready time to the host 202.

If the command is a reset command, the process 800 proceeds to operation 840. A reset command may be issued in the event of an error. At operation 840, the memory device 204 may reset a command queue and metadata of the buffer.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

The background provided in the Background section of the present disclosure section is included only to set context, and the content of this section is not admitted to be prior art. Any of the components or any combination of the components described (e.g., in any system diagrams included herein) may be used to perform one or more of the operations of any flow chart included herein. Further, (i) the operations are example operations, and may involve various additional steps not explicitly covered, and (ii) the temporal order of the operations may be varied.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Some embodiments may include features of the following numbered statements.

Statement 1: A method, comprising: receiving, from an application, a request associated with a memory device, the request being of a request type; issuing a first command to the memory device via a memory controller, the first command based on the request type; polling the memory device for a status of the memory device, the status associated with a readiness of the memory device for the request; determining that the memory device is ready based on the status; and issuing a second command to the memory device via the memory controller to fulfill the request.

Statement 2: The method of statement 1, wherein the memory controller includes a low-power double data rate (LPDDR) memory controller.

Statement 3: The method of statement 1 or 2, wherein the memory device includes a High Bandwidth Flash NAND memory and a front-end controller configured to control the High Bandwidth Flash NAND memory based on commands from the LPDDR memory controller.

Statement 4: The method of any one of statement 1-3, wherein the request type is a write request.

Statement 5: The method of statement 4, wherein the status of the memory device is based on availability of space in a buffer of the memory device.

Statement 6: The method of statement 5, further comprising: reserving an amount of space in the buffer for the application.

Statement 7: The method of any one of statement 1-6, wherein the request type is a read request.

Statement 8: The method of statement 7, wherein the status of the memory device is based on availability of data associated with the request in a buffer of the memory device.

Statement 9: A system, comprising: a host comprising: a memory controller; a processing circuit; and memory connected to the processing circuit, the memory storing instructions that, when executed by the processing circuit, causes performance of a method, the method comprising: receiving, from an application, a request associated with a memory device, the request being of a request type; issuing a first command to the memory device via the memory controller, the first command based on the request type; polling the memory device for a status of the memory device, the status associated with a readiness of the memory device for the request; determining that the memory device is ready based on the status; and issuing a second command to the memory device via the memory controller to fulfill the request.

Statement 10: The system of statement 9, wherein the memory controller includes a low-power double data rate (LPDDR) memory controller.

Statement 11: The system of statement 10, wherein the memory device includes a High Bandwidth Flash NAND memory and a front-end controller configured to control the High Bandwidth Flash NAND memory based on commands from the LPDDR memory controller.

Statement 12: The system of any one of statement 9-11, wherein the request type is associated with a write request.

Statement 13: The system of statement 12, wherein the status of the memory device is based on availability of space in a buffer of the memory device.

Statement 14: The system of statement 13, the method further comprising: reserving an amount of space in the buffer for the application.

Statement 15: The system of any one of statement 9-14, wherein the request type is a read request.

Statement 16: The system of statement 15, wherein the status of the memory device is based on availability of data associated with the request in a buffer of the memory device.

Statement 17: A memory device, comprising: a High Bandwidth NAND (HBN); and a front-end controller configured to control access to the HBN, the front-end controller comprising: a buffer; a processing circuit; and memory connected to the processing circuit, the memory storing instructions that, when executed by the processing circuit, causes performance of a method, the method comprising: receiving a first command from a memory controller of a host device; determining that a status of the buffer satisfies a condition associated with the first command; transmitting the status of the buffer to the memory controller; receiving a second command from the memory controller; and executing an action with respect to the buffer based on the second command.

Statement 18: The memory device of statement 17, wherein the second command is a read request for data stored in the HBN, and wherein the condition includes the data being in the buffer.

Statement 19: The memory device of statement 17 or 18, wherein the second command is a write request for data to be stored in the HBN, and wherein the condition includes the buffer having enough space available for the data.

Statement 20: The memory device of statement 19, wherein the method further comprises: reserving an amount of space in the buffer for the data.

Although exemplary embodiments of a system and method for LPDDR compatible high bandwidth NAND have been specifically described and illustrated herein, many modifications and variations will be apparent to those skilled in the art. Accordingly, it is to be understood that a system and method for LPDDR compatible high bandwidth NAND constructed according to principles of this disclosure may be embodied other than as specifically described herein. The invention is also defined in the following claims, and equivalents thereof.

## Claims

1. A method, comprising:
receiving, from an application, a request associated with a memory device, the request being of a request type;
issuing a first command to the memory device via a memory controller, the first command based on the request type;
polling the memory device for a status of the memory device, the status associated with a readiness of the memory device for the request;
determining that the memory device is ready based on the status; and
issuing a second command to the memory device via the memory controller to fulfill the request.

2. The method of claim 1, wherein the memory controller includes a low-power double data rate, LPDDR, memory controller.

3. The method of claim 2, wherein the memory device includes a High Bandwidth Flash NAND memory and a front-end controller configured to control the High Bandwidth Flash NAND memory based on commands from the LPDDR memory controller.

4. The method of any one of claims 1 to 3, wherein the request type is a write request.

5. The method of claim 4, wherein the status of the memory device is based on availability of space in a buffer of the memory device.

6. The method of claim 5, further comprising:
reserving an amount of space in the buffer for the application.

7. The method of any one of claims 1 to 3, wherein the request type is a read request.

8. The method of claim 7, wherein the status of the memory device is based on availability of data associated with the request in a buffer of the memory device.

9. A system, comprising:
a host comprising:
a memory controller;
a processing circuit; and
memory connected to the processing circuit, the memory storing instructions that, when executed by the processing circuit, causes performance of a method, the method comprising:
receiving, from an application, a request associated with a memory device, the request being of a request type;
issuing a first command to the memory device via the memory controller, the first command based on the request type;
polling the memory device for a status of the memory device, the status associated with a readiness of the memory device for the request;
determining that the memory device is ready based on the status; and
issuing a second command to the memory device via the memory controller to fulfill the request.

10. The system of claim 9, wherein the memory controller includes a low-power double data rate, LPDDR, memory controller.

11. The system of claim 10, wherein the memory device includes a High Bandwidth Flash NAND memory and a front-end controller configured to control the High Bandwidth Flash NAND memory based on commands from the LPDDR memory controller.

12. The system of any one of claims 9 to 11, wherein the request type is a write request.

13. The system of claim 12, wherein the status of the memory device is based on availability of space in a buffer of the memory device.

14. The system of claim 13, the method further comprising:
reserving an amount of space in the buffer for the application.

15. The system of any one of claims 9 to 11, wherein the request type is a read request.
